# EUROPÄISCHE PATENTSCHRIFT

(11) **EP 1 918 007 B1**
(45) Veröffentlichungstag und Bekanntmachung des Hinweises auf die Patenterteilung: **21.07.2010**
(21) Anmeldenummer: 07018367.8
(22) Anmeldetag: 19.09.2007
(51) Int. Cl.: B01D 29/23, B01D 35/147, B01D 29/90

(54) **Eckrohrsieb für aseptische Produktbehandlung und Verfahren zur automatischen Abreinigung des Eckrohrsiebes**
Corner pipe filter for aseptic product processing and method for automatic cleaning of the corner pipe filter
Crible de tuyaux d'angle pour traitement de produit aseptique et procédé de nettoyage automatique du crible de tuyaux d'angle

(30) Priorität: 28.10.2006 DE 102006050946
(43) Veröffentlichungstag der Anmeldung: 07.05.2008
(73) Patentinhaber: GEA TDS GmbH, 31157 Sarstedt (DE)
(72) Erfinder: Kowalik, Gottfried, 48712 Gescher (DE); Busch, Norbert, 46325 Borken (DE); Zimmermann, Dietrich, 48619 Heek-Nienborg (DE); Tenspolde, Josef, 48629 Metelen (DE)
(74) Vertreter: Hauck Patent- und Rechtsanwälte

(56) Entgegenhaltungen:
- DE-A1- 2 339 891
- FR-A- 2 332 047
- GB-A- 313 155
- US-A- 2 793 752

## Beschreibung

### TECHNISCHES GEBIET

Die Erfindung betrifft ein Eckrohrsieb für aseptische Produktbehandlung, insbesondere zum Einsatz in Anlagen zur Herstellung keimfreier Konsummilch oder anderer fließfähiger keimfreier Nahrungsmittel oder sonstiger keimfreier Produkte, mit einem langgestreckten topfförmigen Gehäusekörper, der mit einem Gehäusedeckel lösbar verschlossen ist, mit einem langgestreckten, röhrenförmigen Siebeinsatz, der mit seiner Längsachse wenigstens parallel zur Längsachse des Gehäusekörpers innerhalb desselben orientiert ist und der einerseits in einem Gehäuseboden des Gehäusekörpers und andererseits im Gehäusedeckel austauschbar gelagert ist, wobei zwischen einem Siebmantel des Siebeinsatzes und einem Gehäusemantel des Gehäusekörpers ein Ringraum ausgebildet ist, mit einem am Gehäuseboden angeordneten Eintrittsstutzen mit einer Eintrittsöffnung, die eine fluidgängige Verbindung zum Innenraum des Siebmantels herstellt, mit einem am Gehäusemantel angeordneten Austrittsstutzen mit einer Austrittsöffnung, die eine fluidgängige Verbindung zum Ringraum herstellt, und mit wenigstens einer im Bereich des Gehäusedeckels im Siebeinsatz ausgebildeten, wahlweise schaltbaren Durchtrittsöffnung, über die der Innenraum des Siebmantels mit dem Ringraum wahlweise verbunden ist, sowie ein Verfahren zur automatischen Abreinigung des Eckrohrsiebes.

### STAND DER TECHNIK

Die Herstellung einer verlängert haltbaren Konsummilch, beispielsweise eine sog. UHT-Milch (UHT: Ultra-Hoch-Temperatur) oder eine sog. ESL-(Extended Shelf Life)Milch, erfordert einen aseptisch geführten Prozess. In diesem Prozess müssen alle Komponenten der Prozessanlage, und zwar jede für sich, den aseptischen Anforderungen gerecht werden, da ansonsten aufgrund der unerwünschten Mikroorganismen die geforderte Haltbarkeitszeitspanne des jeweiligen Produkts nicht sichergestellt werden kann.

Problematisch ist in diesem Zusammenhang ein sog. Eckrohrsieb, das in der Regel beispielsweise in UHT-Anlagen hinter dem Hocherhitzer in der Produktleitung vor der Abfüllung des Produkts angeordnet sein muss, damit Beimengungen, die in Form von Schmutz oder sich vom Hocherhitzer ablösenden Anbrennungen und Ablagerungen auftreten können, zurückgehalten werden und nicht in das abzufüllende Produkt gelangen. Die Siebrückstände auf dem Siebeinsatz eines derartigen Eckrohrsiebes sind daher in bestimmten Zeitabständen zu entfernen, wobei die Abreinigung der Siebrückstände und ggf. eine Sterilisierung des Eckrohrfilters im Durchfluss durch eine sog. CIP-Reinigung (CIP: cleaning in place) oder eine sog. SIP-Sterilisation (SIP: sterilization in place) zu erfolgen hat. Eine Demontage des Eckrohrsiebes zum Zwecke seiner Reinigung würde die Gefahr einer Verkeimung in sich bergen und kann daher bei aseptischer Produktbehandlung nicht akzeptiert werden.

Ein manuell reinigbares Eckrohrsieb ist beispielsweise aus der Firmendruckschrift **M & S-ARMATUREN - GMBH**, Armaturen, Rohre und Sonderteile aus Edelstahl, 26446 Friedeburg, bekannt und bildet bislang nach einem innerbetrieblichen Stand der Technik die Grundlage für ein automatisch und im Durchfluss reinigungsfähiges Eckrohrsieb. Um diese Eigenschaften zu erreichen, wurde dieses standardmäßig verfügbare Eckrohrsieb dahingehend modifiziert, dass im Siebeinsatz im Bereich des Gehäusedeckels wenigstens eine wahlweise schaltbare Durchtrittsöffnung ausgebildet ist, über die im Bedarfsfall (Reinigung) der Innenraum des Siebmantels mit dem zwischen Siebmantel und Gehäuse des Eckrohrsiebes gebildeten Ringraum verbunden ist, wobei der Innenraum des Siebmantels mit dem an das Eckrohrsieb heranführenden und der Ringraum mit dem von dem Eckrohrsieb abführenden Produktleitungsabschnitt verbunden ist. Dabei bleibt bei der Reinigung die Durchlässigkeit des Siebmantels parallel zum zusätzlich freigeschalteten Strömungsweg über die Durchtrittsöffnung bestehen. Das Öffnen und Schließen der Durchtrittsöffnung ist über einen Drehmechanismus realisiert, der die Drehbewegung eines schieberartigen Schließgliedes generiert. Die Durchführung der Drehachse durch das Gehäuse des Eckrohrsiebes ist mit einem Spülschloss versehen, das mit einem Desinfektionsmittel (beispielsweise H₂O₂) anhaltend zu beaufschlagen ist.

Der Drehmechanismus des vorstehend kurz umrissenen gattungsbildenden Eckrohrsiebes hat sich als nicht hinreichend zuverlässig, aufgrund der tangentialen Verschiebebewegung der Steuerungsmittel als nicht besonders reinigungsfreundlich und aufgrund der Notwendigkeit, das Spülschloss anhaltend funktionsfähig zu halten, als sehr aufwändig herausgestellt.

Durch die DE 23 39 891 A1 ist eine Filtervorrichtung, insbesondere für Hauswasseranlagen, bekannt, mit der eine beliebig oft wiederholbare hydraulische Reinigung des Filters durchführbar ist. Dies wird dadurch erreicht, dass im Strömungsweg der Flüssigkeit vor dem Filter zwei wechselweise zu öffnende Ventile liegen, wobei der Auslass des einen Ventils der einen Filterseite und derjenige des anderen Ventils der anderen Filterseite zugeordnet ist, und dass das eine Ventil wechselweise und das andere gleichzeitig mit dem Ablassventil zu öffnen ist, sowie eine hydraulische Verbindung vom Filter zum Ablassventil besteht. Bei normalem Betrieb ist das eine Ventil geöffnet während das andere und das Ablassventil geschlossen sind. Das Filter wird hierbei in der einen Richtung durchströmt, wobei sich der Schmutz an der Anströmseite ablagert. Schließt man nun das Ventil und öffnet gleichzeitig das andere und das Ablassventil, so wird das Filter in Gegenrichtung durchströmt, wodurch sich der am Filter abgelagerte Schmutz löst und von der ihn lösenden Flüssigkeit über das Ablassventil aus der Filtereinrichtung hinausgeschwemmt wird. In den Auslass der Filtereinrichtung kann diese schmutzbeladene Flüssigkeit nicht gelangen, weil dorthin keine hydraulische Verbindung besteht.

Es ist Aufgabe der vorliegenden Erfindung, ein Eckrohrsieb der eingangs beschriebenen Art zu schaffen, das im Durchfluss unter aseptischen Bedingungen eine sichere und zuverlässige Reinigung und/oder Sterilisierung erfährt, ohne dass der mit Siebrückständen beladene Siebeinsatz aus dem Eckrohrsieb ausgebaut werden muss.

### ZUSAMMENFASSUNG DER ERFINDUNG

Diese Aufgabe wird durch ein Eckrohrsieb mit den Merkmalen des Anspruchs 1 gelöst. Vorteilhafte Ausführungsformen des vorgeschlagenen Eckrohrsiebes sind Gegenstand der Unteransprüche 2 bis 26. Ein Verfahren zur automatischen Abreinigung des vorgeschlagenen Eckrohrsiebes ist durch die Merkmale des Anspruchs 27 gekennzeichnet. Eine vorteilhafte Ausgestaltung des Verfahrens ist Gegenstand des Unteranspruchs 28.

Der entscheidende erfinderische Lösungsgedanke besteht darin, bei der Abreinigung der Siebrückstände einen automatisch und wahlweise schaltbaren Strömungsweg aus dem Innenraum des Siebmantels in den Ringraum zu schaffen, der im Bereich der Durchtrittsöffnung von einem als Sitzteller ausgebildeten, translatorisch verschieblichen Schließglied gesteuert wird. Dabei wird die Durchtrittsöffnung von einem den Siebmantel stirnseitig berandenden Sitzring umschlossen, wobei in oder an der Durchtrittsöffnung eine erste Sitzfläche ausgebildet ist, die mit der schließgliedseitigen zweiten Sitzfläche zusammenwirkt.

Ein weiterer wesentlicher erfinderischer Lösungsgedanke ist darin zu sehen, dass die Durchführung der translatorisch verschieblichen Ventilstange zur Betätigung des Schließgliedes im Gehäusedeckel des Eckrohrsiebes mit einem Balg überbrückt ist, der die Ventilstange konzentrisch umschließt. Dieser Balg, der als Faltenbalg (DE 32 15 799 C2), Wellrohr oder Membran (EP 0 508 658 B1) ausgebildet sein kann, erstreckt sich in der Regel vom Schließglied bis zu jenem Bereich des Gehäusedeckels, welche von der Ventilstange durchdrungen ist.

Eine derartige Ventilstangenabdichtung mittels eines Balges hat den Vorteil, dass kein Dichtungsspalt zwischen der in axialer Richtung verschieblichen Ventilstange und dem ortsfesten Gehäusedeckel vorhanden ist, in den durch die Relativbewegung der Ventilstange gegenüber dem Gehäusedeckel eine Produktverschleppung stattfinden kann. Es ist bekannt, dass derartige Dichtungsspalte sanitäre Problemzonen darstellen, in denen Bakterien- oder Keimbildung stattfinden kann, wodurch dann infolge der Ventilstangenbewegung, des sog. "Fahrstuhieffektes", Reinfektionen des Produktes im Ventilgehäuse hervorgerufen werden können.

Für hohe sanitäre Ansprüche, insbesondere im Aseptikbereich der Pharma-, Chemie- oder Nahrungsmittelindustrie, ist die Anwendung eines Balges zur Abdichtung einer Ventilstangendurchführung obligatorisch. Die vorgeschlagene Erfindung verwendet diesbezüglich beispielsweise Bauteile und konstruktive Lösungen, wie sie in einem sog. STERICOM^{®} Ventil für sterile Verfahrensprozesse Anwendung finden. Ein derartiges Ventil ist in der Firmendruckschrift **GEA Tuchenhagen, STERICOM^{®} Ventile,** Das Ventilprogramm für sterile Verfahrensprozesse, 21514 Büchen, beschrieben.

Um eine verbesserte Reinigung auch der besonders reinigungskritischen Lagerstellen des Siebeinsatzes gegenüber dem gegenwärtig erreichbaren Stand der Technik zu erreichen, schlägt die Erfindung gemäß einer vorteilhaften Ausgestaltung vor, dass in der Offenstellung des Schließgliedes der Siebeinsatz schwimmend gelagert und im Umfang eines vorgegebenen axialen Verschiebeweges begrenzt verschieblich ist. Die schwimmende Lagerung stellt im Rahmen der axialen und der durch das Lagerspiel vorgegebenen radialen Verschieblichkeit eine Umströmung und Beaufschlagung aller Lagerflächen und aller reinigungskritischen Bereiche mit Reinigungs- oder Sterilisationsmittel sicher.

Das Eckrohrsieb nimmt eine geometrisch einfache und insbesondere strömungsgünstige Form an, wenn der Gehäusemantel und der Siebmantel jeweils zylindrisch ausgeführt und konzentrisch zueinander angeordnet sind, wie dies eine vorteilhafte Ausgestaltung vorsieht.

Die vorstehend beschriebene Ausgestaltung begünstigt zum einen die Ausführung von zwei einfach zu realisierenden Lagerstellen am Siebeinsatz, um diesem in der Offenstellung im Sinne einer schwimmenden Lagerung die notwendige axiale und radiale Beweglichkeit zu geben, und zum anderen die Anordnung der wenigsten einen steuerbaren Durchtrittsöffnung im Sinne der vorgeschlagenen Erfindung. Um dies zu erreichen, sieht eine vorteilhafte Ausgestaltung vor, dass sich, in axialer Richtung gesehen, an den Sitzring ein den Balg umschließendes und diesen in axialer Richtung hauptsächlich aufnehmendes Verbindungsgehäuse anschließt, welches in seiner Mantelfläche wenigstens eine Verbindungsöffnung zum Ringraum besitzt, dass das Verbindungsgehäuse an seinem dem Sitzring abgewandten Ende in einen ersten Führungsring ausmündet, der in einer im Gehäusedeckel angeordneten zylindrischen erste Ausnehmung mit radialem Spiel gelagert ist, und dass an dem dem Sitzring abgewandten Ende des Siebmantels ein zweiter Führungsring angeordnet ist, der in einer im Gehäuseboden ausgebildeten zylindrischen zweiten Ausnehmung mit radialem Spiel gelagert ist.

Um die Fluiddurchgängigkeit der beiden Lagerstellen in der Offenstellung des Schließgliedes noch weiter zu verbessern, ist weiterhin vorgesehen, dass der erste Führungsring außenseits auf seiner Mantelfläche, über seinen Umfang verteilt und wenigstens axial orientiert, eine Anzahl von nutenförmigen ersten Ausnehmungen aufweist, dass die zylindrische zweite Ausnehmung auf ihrer Umfangsfläche, über ihren Umfang verteilt und wenigstens axial orientiert, eine Anzahl von nutenförmigen zweiten Ausnehmungen aufweist, und dass die jeweiligen Ausnehmungen die Lagerstelle des zugeordneten Führungsringes fluiddurchgängiger machen. Dabei können die Ausnehmungen jeweils rein axial oder auch mit einem zusätzlichen tangentialen Richtungsvektor orientiert sein, wodurch im letzten Falle im Lagerspalt und in dem sich anschließenden Ringraum eine wendelförmige, die Abreinigung von Verschmutzungen begünstigende Strömung entsteht.

Die Reinigungswirkung im Ringraum kann weiter verbessert werden, wenn die vorgenannten tangentialen Richtungsvektoren der Ausnehmungen auf beiden Seiten des Siebeinsatzes gleichen Durchlaufsinn aufweisen. Dadurch entsteht im gesamten Ringraum eine einheitlich ausgerichtete schraubenförmige Strömung.

Für die Ausgestaltung der schließgliedseitigen zweiten Sitzfläche und der mit dieser korrespondierenden sitzringseitigen ersten Sitzfläche sind alle aus dem einschlägigen Ventilbau bekannten Sitzflächenformen und Konfigurationen anwendbar (axial/axial, radial/radial, radial-axial/radial-axial d. h. kegelförmig/kegelförmig). Im vorliegenden Falle ist es von Vorteil, wenn beide Sitzflächen jeweils kegelförmig ausgebildet sind und miteinander korrespondieren, da dadurch in der Schließstellung des Schließgliedes der Siebeinsatz in diesem Bereich eine besonders wirksame Zentrierung und Fixierung erfährt. Wird die Schließrichtung des Schließgliedes so gewählt, wie dies weiter vorgeschlagen wird, dass das Schließglied die Durchtrittsöffnung in Richtung zum Gehäuseboden hin schließt, dann wird der Siebeinsatz in dieser Betriebsstellung in die zylindrische zweite Ausnehmung im Gehäuseboden hineingedrückt und er wird auch hier hinreichend sicher zentriert und fixiert.

Damit die Siebrückstände bei der Reinigung sicher über die Durchtrittsöffnung und das Verbindungsgehäuse in den Ringraum ausgetragen werden, werden zwei Verbindungsöffnungen im Verbindungsgehäuse vorgeschlagen, die diametral angeordnet sind. Dabei ist darauf zu achten, dass die Verbindungsstege zwischen den Verbindungsöffnungen nicht zu schmal ausfallen, da sich an schmalen Verbindungsstegen insbesondere faserige Schmutzteilchen und Ablagerungen hartnäckig festsetzen können. Es begünstigt weiterhin die Reinigung im Ringraum außenseits des Verbindungsgehäuses, wenn der Durchtrittsquerschnitt des Ringraums in diesem Bereiche eine Reduzierung erfährt, wodurch die Strömungsgeschwindigkeit in diesem Bereich erhöht wird.

Es ist weiterhin vorgesehen, dass der Siebeinsatz eine als Ganzes auswechselbare Einheit bildet. Dies ermöglicht auf einfache Weise die Inspektion der Siebgaze auf ihre Unversehrtheit und nötigenfalls den Austausch derselben, die zweckmäßig über aseptische Klemmen auf dem Siebmantel festgelegt ist.

Eine vorteilhafte Ausführungsform der Erfindung sieht vor, dass der Balg als Faltenbalg oder Wellrohr ausgebildet ist und zusammen mit dem Schließglied einerseits und einem Balgflansch andererseits eine einstückige Schließgliedanordnung bildet. Diese ist, wie dies weiter vorgeschlagen wird, entweder aus Polytetrafluorethylen (PTFE) oder aus Metall, vorzugsweise aus nichtrostendem Stahl, hergestellt. Eine derartige einstückige Ausgestaltung erleichtert den Ausbau und Austausch derselben, zumal die Schließgliedanordnung das einzige Verschleißteil im Eckrohrsieb darstellt, wenn man von der Siebgaze einmal absieht.

Für das erfindungsgemäße Eckrohrsieb wird ein einfacher und im Wesentlichen wartungsfreier fernsteuerbarer Antrieb vorgeschlagen, der als Hubantrieb mit einem druckmittelbeaufschlagten Kolben mit Federrückstellung ausgeführt ist. Dabei ist der Antrieb in seiner Ruhestellung, in der sich das Schließglied in seiner Schließstellung befindet, nicht angesteuert, so dass die rückstellende Feder das Schließglied in den Sitzring hineindrückt. Bei Ausfall des Druckmittels ist dann in jedem Falle der Filtrationsbetrieb sichergestellt.

Um die Demontage oder Montage des Siebeinsatzes so einfach wie möglich zu gestalten, ist der Gehäusekörper mit dem Gehäusedeckel über eine Flanschverbindung verbunden. Ein bevorzugte Ausführungsform sieht vor, dass die Flansche als Klemmflansche ausgeführt sind, die ein erster Spannring miteinander statisch abgedichtet (vorzugsweise mit einem sog. O-Ring) verbindet. Gemäß einer weiteren Ausführungsform sind die Flansche gleichfalls miteinander statisch abgedichtet verschraubt.

Um die Demontage oder Montage des Antriebs so einfach wie möglich zu gestalten, sieht eine weitere Ausführungsform vor, dass der Antrieb einen als Klemmflansch ausgebildeten Antriebsflansch aufweist, dass am Gehäusedeckel endseitig ein als Klemmflansch ausgebildeter zweiter Deckelflansch vorgesehen ist, und dass die Klemmflansche über einen zweiten Spannring miteinander verbunden sind.

Die Schließgliedanordnung ist wirkungsmäßig über die am Schließglied angreifende Ventilstange mit dem Antrieb verbunden. Das balgseitige Ende der Schließgliedanordnung wird gemäß einem weiteren Vorschlag auf sehr einfache Weise mit dem Gehäusedeckel derart verbunden, dass der Antriebsflansch und der zweite Deckelflansch in Verbindung mit der Innenkontur des sich anschließenden Gehäusedeckels das als Balgflansch ausgebildete Ende des Balges formschlüssig und über einen zweiten Dichtring statisch abgedichtet aufnehmen.

Durch die vorgeschlagene Anbindung des Antriebs an den Gehäusedeckel über eine Flanschverbindung zum einen, insbesondere ein Klemmflanschverbindung, und die gleichfalls vorgeschlagene Anbindung des Balgflanschs in diesem Bereich zum anderen, ist es durch Abstimmung dieser beiden Anbindungen möglich, wie dies eine besonders vorteilhafte Ausgestaltung vorsieht, dass allein durch Trennung der Klemmflansche der Antrieb und die mit letzterem über die Ventilstange verbundene Schließgliedanordnung als Ganzes aus dem Gehäusedeckel, der mit dem Gehäusekörper über einen ersten Dichtring statisch abgedichtet verbundenen bleiben kann, ausbaubar ist.

Das vorgeschlagene Eckrohrsieb und seine Ausführungsformen gemäß der Erfindung machen seine automatische Abreinigung und Sterilisierung im Durchfluss unter aseptischen Bedingungen möglich, wenn die im Anspruch 20 angegebenen Verfahrensschritte a) bis g) durchgeführt werden.

Um die Reinigungswirkung zu intensivieren und die Beweglichkeit des schwimmend gelagerten Siebeinsatzes in der Offenstellung des Schließgliedes zu forcieren, sieht eine vorteilhaft Ausgestaltung des Verfahrens gemäß der Erfindung vor, dass das Schließglied nach den Schritten a) bis e) über eine vorgegebene Zeitspanne eine Abfolge von Schließ- und Öffnungsbewegungen ausführt, und dass sich an die letzte Öffnungsbewegung die Schritte f) und g) anschließen.

Das erfindungsgemäße Eckrohrsieb lässt sich besonders wirksam reinigen, wenn der Siebeinsatz, wie dies vorgeschlagen wird, innerhalb seines Siebmantels einen langgestreckten Strömungskörper umschließt, wobei letzterer erste, zweite und dritte Umlenkmittel aufweist, die, in der genannten Reihenfolge und beginnend vom Eintritt, über seine Länge verteilt angeordnet sind und jeweils auch eine zum Siebmantel hin orientierte rotationssymmetrische radiale Strömungskomponente erzeugen. Der Strömungskörper bewirkt dadurch eine rotationssymmetrische Umlenkung eines Teils der Reinigungsmittelströmung zum Siebmantel hin, wodurch im siebmantelnahen Bereich die strömungsmechanische Wirkung des Reinigungsmittels intensiviert wird.

Eine besonders einfache, gut selbstreinigbare und strömungsmechanisch vorteilhafte Formgestaltung des Strömungskörpers wird dadurch erreicht, dass das erste und das zweite Umlenkmittel jeweils als eine konusförmige Hülse mit Innendurchgang ausgeführt sind, die, in Durchströmungsrichtung gesehen, sich öffnend und deren Rotationsachsen koaxial zur Längsachse des Siebmantels ausgerichtet sind, dass das dritte Umlenkmittel als Prallscheibe ausgebildet ist, die zentrisch im Siebmantel angeordnet ist, und dass das erste, das zweite und das dritte Umlenkmittel jeweils außenseits mit dem Siebmantel einen kreisförmigen Ringspalt bilden. Durch die Ausbildung des dritten Umlenkmittels in Form einer Prallscheibe, die an ihrem Umfang abgerundet ist, wird sichergestellt, dass, in Strömungsrichtung gesehen, auch der Endabschnitt des Siebmantels noch einwandfrei und zuverlässig gereinigt wird.

Der den Innenraum des Siebmantels durchsetzende Volumenstrom des Reinigungsmittels verringert sich in axialer Richtung, da Reinigungsmittel kontinuierlich durch den Siebmantel nach außen in den Ringraum abgeführt wird. Um, in Strömungsrichtung gesehen, am Ende des Siebmantels noch eine hinreichende Strömungsgeschwindigkeit sicherzustellen, ist vorgesehen, dass die erste kleine Durchtrittsöffnung am ersten Umlenkmittel größer als die zweite kleine Durchtrittsöffnung am zweiten Umlenkmittel ausgeführt ist.

Eine sehr einfache Ausgestaltung des Strömungskörpers, der vorzugsweise in Blechbauweise ausgeführt ist, wird erreicht, wenn er aus wenigstens einer langgestreckten Distanzleiste besteht, die gegenüber dem Siebeinsatz ein Fügespiel aufweist und an der die Umlenkmittel fest angeordnet sind.

Eine gute Zentrierung und allseits sichere Beabstandung des Strömungskörpers von dem diesen umschließenden Siebmantel ist sichergestellt, wenn vier über den Umfang des Siebmantels gleichmäßig verteilt angeordnete Distanzleisten vorgesehen sind.

Die Mindestanforderungen an die angestrebte notwendige Umlenkung eines Teils der Reinigungsmittelströmung zum Siebmantel hin wird erfüllt, wenn am Strömungskörper wenigstens ein erstes Umlenkmittel, anschließend wenigstens ein zweites Umlenkmittel und abschließend das dritte Umlenkmittel vorgesehen sind.
Eine optimale Wirksamkeit des Strömungskörpers bei den üblicherweise zur Anwendung kommenden Längen des Siebmantels ist gegeben, wenn drei erste Umlenkmittel, zwei zweite Umlenkmittel und das dritte Umlenkmittel vorgesehen sind.

Als Umlenkmittel eignen sich auch andere als die vorstehend beschriebenen Einbauten. Wesentlich ist dabei, dass diese einen Teil der Reinigungsmittel- oder Sterilisierungsmittel-Strömung rotationssymmetrisch zum Siebmantel hin umlenken.

### KURZBESCHREIBUNG DER ZEICHNUNGEN

Zwei Ausführungsbeispiele des vorgeschlagenen Eckrohrsiebes gemäß der Erfindung sind in der Zeichnung dargestellt und werden nachfolgend beschrieben. Es zeigen
- **Figur 1**: eine perspektivische Darstellung einer bevorzugten Ausführungsform eines meridian aufgeschnittenen Eckrohrsiebes gemäß der Erfindung, wobei eine Schließgliedanordnung in Verbindung mit einem Antrieb nur in Bezug auf die äußere Kontur konkretisiert und ansonsten nur schematisch dargestellt sind;
- **Figur 2**: in Ansichtsdarstellung ein Meridianschnitt durch das Eckrohrsieb gemäß **Figur 1**, wobei sich das Schließglied in seiner Schließstellung befindet und somit die Betriebsstellung bei Filtration dargestellt ist;
- **Figur 3**: in Ansichtsdarstellung ein Meridianschnitt durch das Eckrohrsieb gemäß **Figur 1**, wobei sich das Schließglied in seiner Offenstellung befindet und somit die Betriebsstellung bei Reinigung oder Sterilisierung dargestellt ist;
- **Figur 4**: eine perspektivische Darstellung einer bevorzugten Ausführungsform eines Strömungskörpers gemäß der Erfindung;
- **Figur 5**: den Strömungskörper gemäß **Figur 4** in seiner Einbaulauge im Eckrohrsieb gemäß **Figur 2**, wobei sich dieses in der Schließstellung befindet, die Durch- und Umströmung des Strömungskörpers qualitativ jedoch für die Offenstellung des Eckrohrsiebes dargestellt ist und
- **Figur 6**: eine perspektivische Darstellung des meridian aufgeschnittenen Eckrohrsiebes gemäß **Figur 5**.

### DETAILLIERTE BESCHREIBUNG

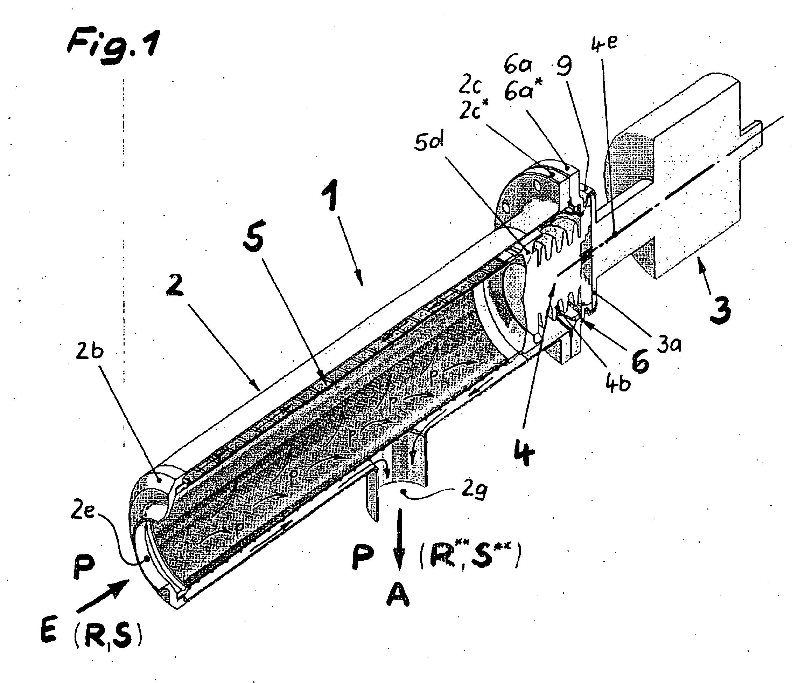

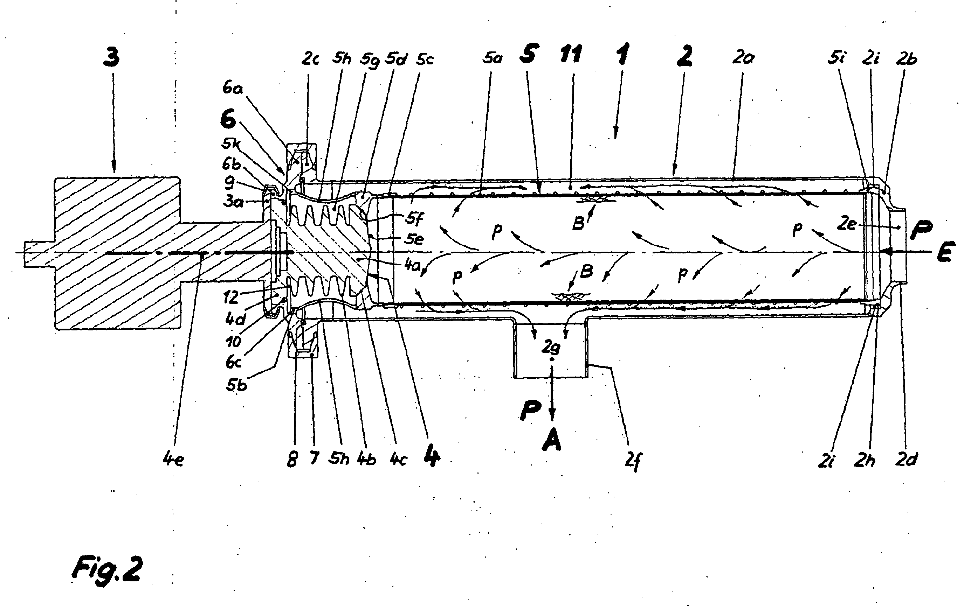

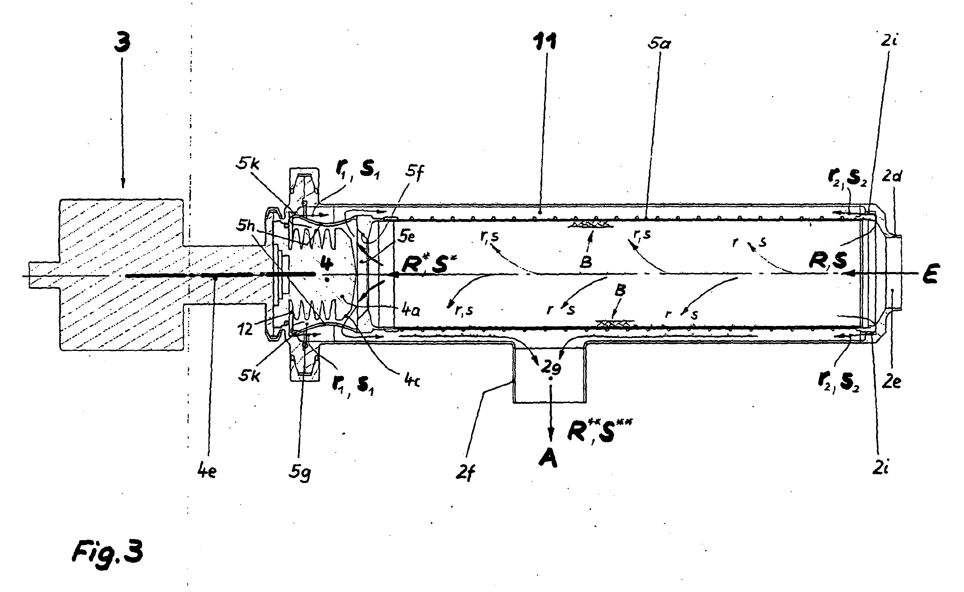

Das erfindungsgemäße Eckrohrsieb 1 (**Figuren 1** bis **3**) besteht aus einem langgestreckten topfförmigen Gehäusekörper 2, dessen Gehäusemantel 2a, bezogen auf die Zeichnungslage in **Figur 1**, linksseitig von einem Gehäuseboden 2b begrenzt ist, an dem ein Eintrittsstutzen 2d mit einer Eintrittsöffnung 2e zum Anschluss an eine Produkt P oder Reinigungs- oder Sterilisierungsmittel R bzw. S heranführende Leitung ausgeformt ist (**Figur 1**). Der Gehäusemantel 2a endet rechtsseitig in einem Gehäuseflansch 2c, 2c*, wobei dieser in der Regel als Klemmflansch 2c (**Figuren 2** und **3**) oder in modifizierter Form als Schraubflansch. 2c* (**Figur 1**) ausgeführt ist. Der Gehäuseflansch 2c, 2c* dient zur Befestigung eines Gehäusedeckels 6, der außenseits in einem mit der Flanschausführung des Gehäusemantels 2a korrespondierenden ersten Deckelflansch 6a, 6a* (Schraubflansch 6a: **Figuren 2** und **3**; Klemmflansch 6a: **Figur 1**) endet. Beide Klemmflansche 2c, 6a werden über einen ersten Spannring 7 miteinander kraft- und formschlüssig verbunden, und sie sind über einen ersten Dichtring 8, der vorzugsweise ein sog. O-Ring, gegeneinander statisch abgedichtet.

Auf seiner dem Gehäusekörper 2 abgewandten Stirnseite besitzt der Gehäusedeckel 6 einen in der Regel als Klemmflansch ausgebildeten zweiten Deckelflansch 6b, wobei der erste und der zweite Deckelflansch 6a bzw. 6a* und 6b innenseits eine den Gehäusedeckel 6 durchdringende, mehrfach im Durchmesser abgestufte, rotationssymmetrische Innenkontur umschließen(**Figuren 2** **und** **3**). Über den zweiten Deckelflansch 6b wird ein mit einem entsprechend korrespondierenden Antriebsflansch 3a ausgestatteter Antrieb 3 an dem Gehäusedeckel 6 befestigt, wodurch der Gehäusedeckel 6 nunmehr geschlossen ist. Als Verbindungsmittel dient hier ein zweiter Spannring 9.

Im Gehäusekörper 2 ist ein langgestreckter, röhrenförmiger Siebeinsatz 5 angeordnet, wobei beide bevorzugt jeweils zylindrisch ausgeführt sind. Der Siebeinsatz 5 ist über seine überwiegende Erstreckungslänge in Form eines Siebmantels 5a ausgeführt, auf dem eine den Anforderungen entsprechende Siebgaze über aseptische Klemmen austauschbar befestigt ist. An seinem dem Gehäuseboden 2b benachbarten Ende mündet der Siebeinsatz 5 in einen zweiten Führungsring 5i aus. Insoweit entspricht der Siebeinsatz 5 handelsüblichen Ausführungen, wie sie beispielsweise über die vorg. Firmendruckschrift **M & S-ARMATUREN - GMBH,** Armaturen, Rohre und Sonderteile aus Edelstahl, angeboten werden.

Der Siebeinsatz 5 ist mit seiner Längsachse wenigstens parallel, in der Regel konzentrisch zur Längsachse des Gehäusekörpers 2 angeordnet, und er ist einerseits in dem Gehäuseboden 2b und andererseits im Gehäusedeckel 6 in Form einer sog. schwimmenden Lagerung austauschbar gelagert. Über die Eintrittsöffnung 2e besteht eine fluidgängige Verbindung zum Innenraum des Siebmantels 5a. Zwischen dem Siebmantel 5a und dem Gehäusemantel 2a ist ein Ringraum 11 ausgebildet, der über einen am Gehäusemantel 2a angeformten Austrittsstutzen 2f mit einer Austrittsöffnung 2g an das Produkt P oder Reinigungs- oder Sterilisierungsmittel R** bzw. S** abführende Leitung angeschlossen ist (**Figur 1**).

An dem dem Gehäusedeckel 6 zugewandten Ende des Siebmantels 5a endet letzterer in einem Siebring 5c, an den sich stirnseitig ein Sitzring 5d anschließt, der eine mit dem Innenraum des Siebmantels 5a verbundene Durchtrittsöffnung 5e umschließt. In oder an der Durchtrittsöffnung 5e ist eine erste Sitzfläche 5f ausgebildet, die sich im Ausführungsbeispiel in der Durchtrittsöffnung 5e befindet und kegelförmig ausgeführt ist. Die Durchtrittsöffnung 5e wird über ein translatorisch verschiebliches Schließglied 4a, das als Sitzteller mit einer kegelförmigen zweiten Sitzfläche 4c ausgebildet ist und mit der ersten Sitzfläche 5f korrespondiert und zusammenwirkt, wahlweise geöffnet oder geschlossen. Im Ausführungsbeispiel schließt das Schließglied 4a die Durchtrittsöffnung 5e in Richtung zum Gehäuseboden 2b hin. Das Schließglied 4a ist über eine durch den Gehäusedeckel 6 hindurchgeführte Ventilstange 4e mit dem fernsteuerbaren Antrieb 3 verbunden, wobei diese Durchführung der Ventilstange 4e mit einem Balg 4b überbrückt ist, der die Ventilstange 4e koaxial umschließt und einerseits mit dem Schließglied 4a und andererseits mit dem Gehäusedecke 6 verbunden ist.

An den Sitzring 5d schließt sich, in axialer Richtung gesehen, ein den Balg 4b umschließendes und diesen in axialer Richtung hauptsächlich aufnehmendes Verbindungsgehäuse 5g an, welches in seiner Mantelfläche wenigstens eine Verbindungsöffnung 5h zum Ringraum 11 besitzt. Im Ausführungsbeispiel sind zwei Verbindungsöffnungen 5h vorgesehen, die diametral angeordnet sind. Somit kann über die wahlweise schaltbare Durchtrittsöffnung 5e der Innenraum des Siebmantels 5a über das Verbindungsgehäuse 5g und seine Verbindungsöffnungen 5h mit dem Ringraum 11 verbunden werden.

Das Verbindungsgehäuse 5g mündet an seinem dem Sitzring 5d abgewandten Ende in einen ersten Führungsring 5b aus, der in einer im Gehäusedeckel 6 angeordneten zylindrischen ersten Ausnehmung 6c mit radialem Spiel gelagert ist. Der erste Führungsring 5b weist außenseits auf seiner Mantelfläche, über seinen Umfang verteilt und wenigstens axial orientiert, eine Anzahl von nutenförmigen ersten Ausnehmungen 5k auf, die die Lagerstelle 5b, 6c fluiddurchgängiger machen.

Der zweite Führungsring 5i, der an dem dem Sitzring 5d abgewandten Ende des Siebmantels 5a angeordnet ist, findet seine Lagerung mit radialem Spiel in einer im Gehäuseboden 2b ausgebildeten zylindrischen zweiten Ausnehmung 2h. Letztere weist auf ihrer Umfangsfläche, über ihren Umfang verteilt und wenigstens axial orientiert, eine Anzahl von nutenförmigen zweiten Ausnehmungen 2i auf, die die Lagerstelle 5i, 2h fluiddurchgängiger machen. Die Ausnehmungen 5k, 2i in den Lagerstellen 5b, 6c bzw. 5i, 2h können neben dem jeweiligen axialen Richtungsvektor zusätzlich jeweils einen tangentialen Richtungsvektor aufweisen, wobei eine einheitlich gerichtete wendelförmige Strömung im Ringraum 11 erreicht wird, wenn die tangentialen Richtungsvektoren einen gleichen Durchlaufsinn aufweisen.

In der vorstehend beschriebenen Ausgestaltung bildet der Siebeinsatz 5 eine als Ganzes auswechselbare Einheit. In der Schließstellung des Schließgliedes 4a (**Figur 2**) befindet sich der Antrieb 3, der vorzugsweise fernsteuerbar und als Hubantrieb mit einem druckmittelbeaufschlagten Kolben mit Federrückstellung ausgeführt ist, zweckmäßigerweise in seiner Ruhestellung. In dieser Ruhestellung ist er nicht mit Druckmittel angesteuert, so dass die Feder das Schließglied 4a mit seiner zweiten Sitzfläche 4c in die erste Sitzfläche 5f innerhalb der kegelförmigen Durchtrittsöffnung 5e hineindrückt und somit der gesamte Siebeinsatz 5 über die Stirnfläche des zweiten Führungsringes 5i in der zylindrischen zweiten Ausnehmung 2h im Gehäuseboden 2b zur Anlage kommt. In dieser Lage wird deutlich, dass zwischen dem stirnseitigen Ende des Siebeinsatzes 5, am ersten Führungsring 5b, und der Stirnfläche der zylindrischen ersten Ausnehmung 6c ein axialer Verschiebeweg 12 vorgesehen ist, der erst in der Offenstellung des Schließgliedes 4a eine sog. schwimmende Lagerung und damit im Umfang dieses axialen Verschiebeweges 12 eine begrenzte Verschieblichkeit des Siebeinsatzes 5 ermöglicht.

Diese Betriebsstellung des erfindungsgemäßen Eckrohrsiebes 1 ermöglicht die Filtration des Produktes P, das über die Eintrittsöffnung 2e (Eintritt E) in den Innenraum des Siebmantels 5a gelangt. Die Strömung des Produktes P verzweigt sich hier in eine Vielzahl Teilströme p und durchsetzt die Perforation des Siebmantels 5a, um über den Ringraum 11 und schließlich über die Austrittsöffnung 2g (Austritt A) das Eckrohrsieb 1 zu verlassen. Die unerwünschten Beimengungen des Produktes P (beispielsweise Schmutz, Ablagerungen und Anbrennungen am Hocherhitzer) werden in Form von Siebrückständen B auf der Innenseite des Siebmantels 5a zurückgehalten.

Der Balg 4b ist beispielsweise als Faltenbalg (**Figuren 2** und **3**) oder als Wellrohr ausgebildet und er bildet zusammen mit dem Schließglied 4a einerseits und einem Balgflansch 4d andererseits eine einstückige Schließgliedanordnung 4. Diese Schließgliedanordnung 4 wird bevorzugt entweder aus Polytetrafluorethylen (PTFE) oder aus Metall, vorzugsweise aus nichtrostendem Stahl, hergestellt.

Die Verbindung des Balges 4b mit dem Gehäusedeckel 6 erfolgt zweckmäßig dergestalt, dass der Antriebsflansch 3a und der zweite Deckelflansch 6b in Verbindung mit der Innenkontur des sich anschließenden Gehäusedeckels 6 das als Balgflansch 4d ausgebildete Ende des Balges 4b formschlüssig und über einen zweiten Dichtring 10 statisch abgedichtet aufnehmen. Der Dichtring 10, vorzugsweise ein sog. O-Ring, macht in dieser Anordnung die unmittelbare gegenseitige Abdichtung der Klemmflansche 3a, 6b überflüssig.

Die gewählte Anordnung zeigt, dass allein durch Trennung der Klemmflansche 3a, 6b der Antrieb 3 und die mit letzterem über die Ventilstange 4e verbundene Schließgliedanordnung 4 als Ganzes aus dem Gehäusedeckel 6, der mit dem Gehäusekörper 2 über den ersten Dichtring 8 statisch abgedichtet verbundenen bleiben kann, ausbaubar ist.

In der Offenstellung des Schließgliedes 4a (**Figur 3**) ist die Reinigung und ggf. Sterilisierung des erfindungsgemäßen Eckrohrsiebes 1 automatisch möglich.

Nunmehr ist über die Durchtrittsöffnung 5e und den zwischen der sitzringseitigen ersten Sitzfläche 5f und der schließgliedseitigen zweiten Sitzfläche 4c gebildeten Ringspalt eine fluidgängige Verbindung zwischen dem Innenraum des Siebmantels 5a, dem sich anschließenden Innenraum des Verbindungsgehäuses 5g und seinen Verbindungsöffnungen 5h und dem Ringraum 11 geschaltet. Am Eintritt E über die zuführende Leitung eintretendes Reinigungs- oder Sterilisierungsmittel R bzw. S wird zum größten Teil als gesteuertes Reinigungs- oder Sterilisierungsmittel R* bzw. S* über den vorstehend beschriebenen Strömungsweg geführt. Das gesteuerte Reinigungsmittel R* reinigt als gesteuerter Teilstrom die Siebrückstände B ab und trägt die Schmutzfracht über den Ringraum 11 und die Austrittsöffnung 2g aus dem Eckrohrsieb 1 in die abführende Leitung aus. Parallel und zeitgleich zum gesteuerten Reinigungs- oder Sterilisierungsmittel R* bzw. S* wird der Siebmantel 5a von Teilströmen Reinigungs- oder Sterilisierungsmittel r bzw. s durchsetzt.

Durch die wirkenden Strömungskräfte positioniert sich der Siebeinsatz 5 infolge seiner schwimmenden Lagerung in einer Zwischenstellung, in der die Ausnehmungen 5k und 2i und damit die beiderseitig vorgesehenen Lagerstellen 5b, 6c und 5i, 2h von ersten Teilströmen Reinigungs- oder Sterilisierungsmittel r₁ bzw. S₁ bzw. zweiten Teilströmen Reinigungs- oder Sterilisierungsmittel r₂ bzw. S₂ durchsetzt und damit gereinigt bzw. sterilisiert werden.

Damit ist ein Verfahren zur automatischen Abreinigung eines Eckrohrsiebes 1 möglich, bei dem eine Durchflussreinigung und/oder Durchflusssterilisierung des Eckrohrsiebes 1 unter aseptischen Bedingungen nach folgenden Schritten erfolgt:
a) Überführen des Schließgliedes 4a in seine Offenstellung, so dass der Siebeinsatz 5 begrenzt radial und begrenzt axial allseits freigegeben wird;
b) Zuführen eines Reinigungsmittels R oder Sterilisierungsmittels S über die Eintrittsöffnung 2e in das Eckrohrsieb 1;
c) Abreinigen von Siebrückständen B durch ein gesteuertes Reinigungs- oder Sterilisierungsmittel R*; S* längs der Innenwand des Siebmantels 5a auf dem Weg über die Durchtrittsöffnung 5e und Abführen der Mittel R*; S* und der Siebrückstände B über den Ringraum 11;
d) gleichzeitig Reinigen der Lagerstellen des Siebeinsatzes 5 einerseits im Bereich des Gehäusedeckels 6 mittels erster Teilströme Reinigungs- oder Sterilisierungsmittel r₁, S₁ auf dem Weg über die Durchtrittsöffnung 5e in den Ringraum 11 und andererseits im Bereich des Gehäusebodens 2b mittels zweiter Teilströme Reinigungs- oder Sterilisierungsmittel r₂, s₂ aus dem Innenraum des Siebmantels 5a in den Ringraum 11;
e) gleichzeitig Reinigen aller Siebbohrungen des Siebmantels 5a mittels Teilströme Reinigungs- oder Sterilisierungsmittel r, s aus dem Innenraum des Siebmantels 5a in den Ringraum 11;
f) Ausschieben des Reinigungs- oder Sterilisierungsmittels aus dem Eckrohrsieb 1 und Abführen desselben als abgeführtes Reinigungs- oder Sterilisierungsmittel R**; S** über die Austrittsöffnung 2g und
g) Überführen des Schließgliedes 4a in seine Schließstellung.

Die Reinigungswirkung lässt sich noch intensivieren, wenn das Schließglied 4a über eine vorgegebene Zeitspanne eine Abfolge von Schließ- und Öffnungsbewegungen ausführt (sog. lntervallreinigung).

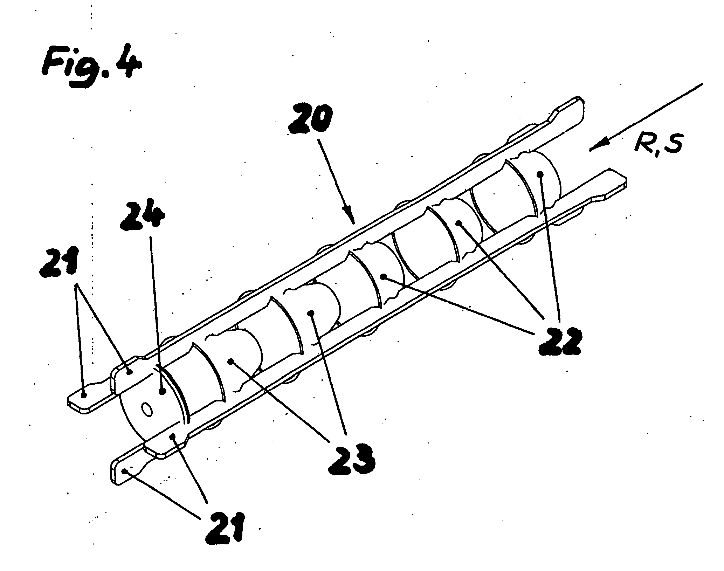

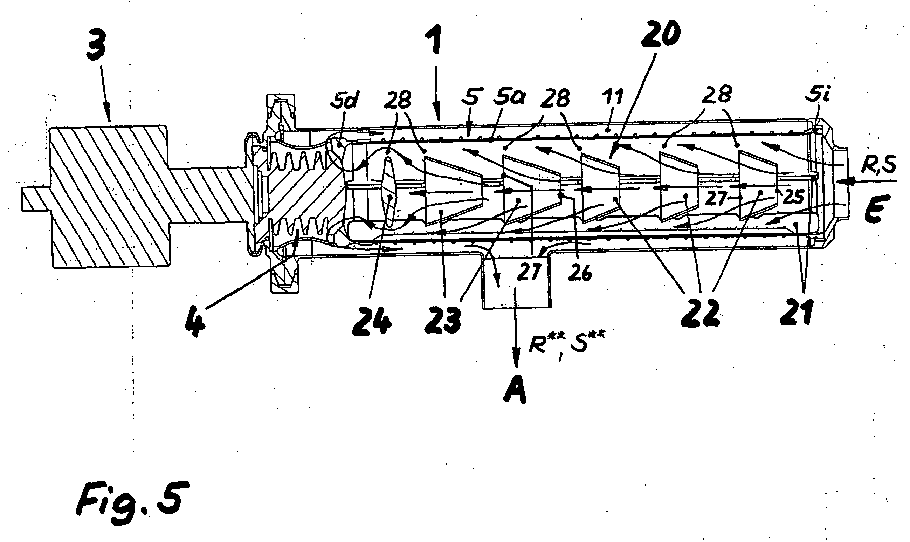

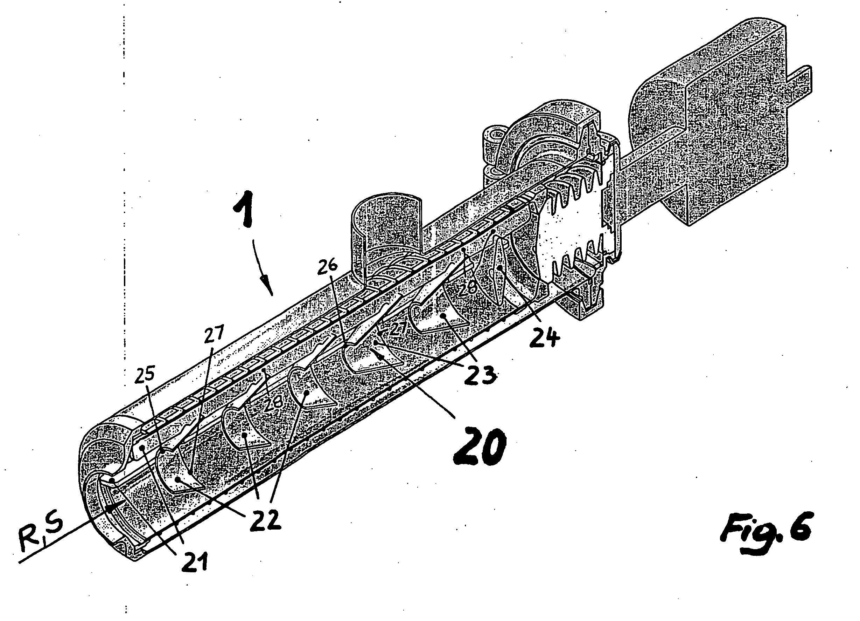

In **Figuren 4** ist eine vorteilhafte Ausführungsform eines Strömungskörpers 20 dargestellt, der in vorzugsweise in Blechbauweise ausgeführt ist und durch seine Formgebung eine rotationssymmetrische Umlenkung eines Teils der Strömung des zugeführten Reinigungsmittels R oder Sterilisierungsmittels S zum Siebmantel 5a hin bewirkt, wodurch im siebmantelnahen Bereich die strömungsmechanische Wirkung intensiviert wird. Diese Wirkungsweise ist aus den **Figuren 5** und **6** ersichtlich, wo der Strömungskörper jeweils in seiner Einbaulage im Eckrohrsieb 1 dargestellt ist. Nachfolgend wird zum Zwecke der Vereinfachung nur der Begriff Reinigungsmittel R, S verwendet.

Der Strömungskörper 20 (**Figur 4**) besteht aus vier über den Umfang des Siebmantels 5a gleichmäßig verteilt angeordneten langgestreckten Distanzleisten 21 (**Figur 6**), die radial außenseits gegenüber dem Siebmantel 5a ein radiales Fügespiel und gegenüber den stirnseitigen Begrenzungen des Siebeinsatzes 5, dem Sitzring 5d einerseits und dem zweiten Führungsring 5i andererseits, ein axiales Fügespiel aufweisen (**Figur 5**). An den Distanzleisten 21 sind, über deren Länge verteilt, Umlenkmittel 22, 23 und 24 fest angeordnet.

Das erste Umlenkmittel 22 und das zweite Umlenkmittel 23 sind jeweils als eine konusförmige Hülse mit Innendurchgang ausgeführt (s. insbesondere **Figur 6**), die, in Durchströmungsrichtung des Reinigungsmittels R, S gesehen, sich öffnend und deren Rotationsachsen koaxial zur Längsachse des Siebmantels 5a ausgerichtet sind. Das dritte Umlenkmittel 24 ist als Prallplatte ausgeführt, die zentrisch im Siebmantel 5a angeordnet ist. Die Umlenkmittel 22, 23 und 24 bilden jeweils außenseits mit dem Siebmantel 5a an der jeweils engsten Stelle einen kreisförmigen Ringspalt 28. Der Innendurchgang des als konusförmige Hülse ausgebildeten ersten Umlenkmittels 22 wird einerseits von einer ersten kleinen Durchtrittsöffnung 25 und andererseits von einer großen Durchtrittsöffnung 27 begrenzt und der Innendurchgang des als konusförmige Hülse ausgebildeten zweiten Umlenkmittels 23 wird einerseits von einer zweiten kleinen Durchtrittsöffnung 26 und andererseits von der großen Durchtrittsöffnung 27 begrenzt. Diese abgestufte Änderung der Durchtrittsquerschnitte des ersten und des zweiten Umlenkmittels 22, 23 stellt im Zuge der Durchströmung des Siebmantels 5a in letzterem über dessen gesamte Länge eine hinreichend große Strömungsgeschwindigkeit sicher.

Von dem ersten Umlenkmittel 22 sind drei an der Zahl vorgesehen, die sich an den Eintritt E anschließen, anschließend folgen zwei zweite Umlenkmittel 24 und abschließend ist das dritte Umlenkmittel 24 vorgesehen.

Eine qualitative Strömungsverteilung zeigt **Figur 5**. Die Umlenkmittel 22, 23 und 24 stellen jeweils, im Zusammenwirken mit dem umgebenden Siebmantel 5a, eine Verengung des Durchtrittsquerschnitts dar, wodurch sich im jeweils verengten Durchtrittsquerschnitt die Strömungsgeschwindigkeit gegenüber dem vorgeordneten, nicht verengten Durchtrittsquerschnitt erhöht. Die in Strömungsrichtung sich erweiternden konusförmigen Hülsen 22 und 23 bilden jeweils außenseits einen sich im Durchtrittsquerschnitt verjüngenden Ringraum, der an der jeweils engsten Stelle als Ringspalt 28 bezeichnet ist, wodurch jeweils ein Teil der im Siebmantel 5a verbleibenden Strömung beschleunigt und rotationssymmetrisch zum Siebmantel 5a hin umgelenkt wird. Hierdurch wird die strömungsmechanische Wirkung der Strömung des Reinigungsmittels R, S im siebmantelnahen Bereich intensiviert. Ein Teil der vorgenannten jeweiligen Strömung tritt auf ihrem axialen Weg durch den Siebeinsatz 5 fortlaufend durch den Siebmantel 5a hindurch und gelangt in den Ringraum 11.

Die den jeweiligen Innendurchgang der konusförmigen Hülsen 22 und 23 durchsetzende verbleibende Strömung ist eine verzögerte Strömung, die deshalb zur Ablösung neigt. Die entstehenden Ablösungswirbel erhöhen die Turbulenz der jeweils verbleibenden Strömung, wodurch die Reinigungswirkung verbessert wird. Das als Prallplatte ausgebildete dritte Umlenkmittel 24 hat keinen Innendurchgang, so dass die dort ankommende Strömung ausschließlich nach außen umgelenkt wird und dadurch das benachbarte Ende des Siebmantels 5a und den angrenzenden Endabschnitt des Siebeinsatzes 5 in Verbindung mit dem Sitzring 5d noch sicher reinigt.

### BEZUGSZEICHENLISTE DER VERWENDETEN ABKÜRZUNGEN

- 1: Eckrohrsieb

- 2: Gehäusekörper
- 2a: Gehäusemantel
- 2b: Gehäuseboden
- 2c: Gehäuseflansch (Klemmflansch)
- 2c*: modifizierter Gehäuseflansch (Schraubflansch)

- 2d: Eintrittsstutzen
- 2e: Eintrittsöffnung
- 2f: Austrittsstutzen
- 2g: Austrittsöffnung
- 2h: zylindrische zweite Ausnehmung
- 2i: zweite Ausnehmungen

- 3: Antrieb (Hubantrieb)
- 3a: Antriebsflansch

- 4: Schließgliedanordnung
- 4a: Schließglied
- 4b: Balg (Faltenbalg, Wellrohr)
- 4c: zweite Sitzfläche (schließgliedseitige)
- 4d: Balgflansch
- 4e: Ventilstange

- 5: Siebeinsatz
- 5a: Siebmantel
- 5b: erster Führungsring
- 5c: Siebring
- 5d: Sitzring
- 5e: Durchtrittsöffnung
- 5f: erste Sitzfläche (sitzringseitige)
- 5g: Verbindungsgehäuse
- 5h: Verbindungsöffnung
- 5i: zweiter Führungsring
- 5k: erste Ausnehmungen

- 6: Gehäusedeckel
- 6a: erster Deckelflansch (Klemmflansch)
- 6a*: modifizierter erster Deckelflansch (Schraubflansch)

- 6b: zweiter Deckelflansch (Klemmflansch)
- 6c: zylindrische erste Ausnehmung

- 7: erster Spannring
- 8: erster Dichtring
- 9: zweiter Spannring
- 10: zweiter Dichtring
- 11: Ringraum
- 12: axialer Verschiebeweg

- 20: Strömungskörper
- 21: Distanzleiste
- 22: erstes Umlenkmittel (erste konusförmige Hülse)
- 23: zweites Umlenkmittel (zweite konusförmige Hülse)
- 24: drittes Umlenkmittel (Prallscheibe)
- 25: erste kleine Durchtrittsöffnung
- 26: zweite kleine Durchtrittsöffnung
- 27: große Durchtrittsöffnung
- 28: Ringspalt

- A: Austritt
- B: Siebrückstände

- E: Eintritt
- P: Produkt

- R: zugeführtes Reinigungsmittel (zugeführter Gesamtstrom)
- R*: gesteuertes Reinigungsmittel (geschalteter Teilstrom; ggf. mit Siebrückständen beladener Teilstrom)
- R**: abgeführtes Reinigungsmittel (ggf. mit Siebrückständen beladener Gesamtstrom)

- S: zugeführtes Sterilisierungsmittel
- S*: gesteuertes Sterilisierungsmittel
- S**: abgeführtes Sterilisierungsmittel

- p: Teilströme Produkt
- r: Teilströme Reinigungsmittel (über Sieböffnungen)
- s: Teilströme Sterilisierungsmittel (über Sieböffnungen)

- r₁: erste Teilströme Reinigungsmittel
- r₂: zweite Teilströme Reinigungsmittel
- S₁: erste Teilströme Sterilisierungsmittel
- S₂: zweite Teilströme Sterilisierungsmittel

## Patentansprüche

1. Eckrohrsieb (1) für aseptische Produktbehandlung, mit einem langgestreckten topfförmigen Gehäusekörper (2), der mit einem Gehäusedeckel (6) lösbar verschlossen ist, mit einem langgestreckten, röhrenförmigen Siebeinsatz (5), der mit seiner Längsachse wenigstens parallel zur Längsachse des Gehäusekörpers (2) innerhalb desselben orientiert ist und der einerseits in einem Gehäuseboden (2b) des Gehäusekörpers (2) und andererseits im Gehäusedeckel (6) austauschbar gelagert ist, wobei zwischen einem Siebmantel (5a) des Siebeinsatzes (5) und einem Gehäusemantel (2a) des Gehäusekörpers (2) ein Ringraum (11) ausgebildet ist, mit einem am Gehäuseboden (2b) angeordneten Eintrittsstutzen (2d) mit einer Eintrittsöffnung (2e), die eine fluidgängige Verbindung zum Innenraum des Siebmantels (5a) herstellt, mit einem am Gehäusemantel (2a) angeordneten Austrittsstutzen (2f) mit einer Austrittsöffnung (2g), die eine fluidgängige Verbindung zum Ringraum (11) herstellt, mit wenigstens einer im Bereich des Gehäusedeckels (6) im Siebeinsatz (5) ausgebildeten, wahlweise schaltbaren Durchtrittsöffnung (5e), über die der Innenraum des Siebmantels (5a) mit dem Ringraum (11) wahlweise verbunden ist, wobei die Durchtrittsöffnung (5e) von einem den Siebmantel (5a) stirnseitig berandenden Sitzring (5d) umschlossen ist, wobei in oder an der Durchtrittsöffnung (5e) eine erste Sitzfläche (5f) ausgebildet ist, wobei die Durchtrittsöffnung (5e) über ein translatorisch verschiebliches Schließglied (4a), das mit einer zweiten Sitzfläche (4c) mit der ersten Sitzfläche (5f) zusammenwirkt, wahlweise geöffnet oder geschlossen wird, wobei das Schließglied (4a) über eine durch den Gehäusedeckel (6) hindurchgeführte Ventilstange (4e) mit einem fernsteuerbaren Antrieb (3) verbunden ist, und wobei diese Durchführung mit einem Balg (4b) überbrückt ist, der die Ventilstange (4e) koaxial umschließt und der einerseits mit dem Schließglied (4a) und andererseits mit dem Gehäusedeckel (6) verbunden ist.

2. Eckrohrsieb nach Anspruch 1,
**dadurch gekennzeichnet,**
**dass** in der Offenstellung des Schließgliedes (4a) der Siebeinsatz (5) schwimmend gelagert und im Umfang eines vorgegebenen axialen Verschiebeweges (12) begrenzt verschieblich ist.

3. Eckrohrsieb nach Anspruch 1 oder 2,
**dadurch gekennzeichnet,**
**dass** der Gehäusemantel (2a) und der Siebmantel (5a) jeweils zylindrisch ausgeführt und konzentrisch zueinander angeordnet sind.

4. Eckrohrsieb nach einem der Ansprüche 1 bis 3,
**dadurch gekennzeichnet,**
**dass** sich, in axialer Richtung gesehen, an den Sitzring (5d) ein den Balg (4b) umschließendes und diesen in axialer Richtung hauptsächlich aufnehmendes Verbindungsgehäuse (5g) anschließt, welches in seiner Mantelfläche wenigstens eine Verbindungsöffnung (5h) zum Ringraum (11) besitzt, dass das Verbindungsgehäuse (5g) an seinem dem Sitzring (5d) abgewandten Ende in einen ersten Führungsring (5b) ausmündet, der in einer im Genhäusedeckel (6) angeordneten zylindrischen erste Ausnehmung (6c) mit radialem Spiel gelagert ist, und dass an dem dem Sitzring (5d) abgewandten Ende des Siebmantels (5a) ein zweiter Führungsring (5i) angeordnet ist, der in einer im Gehäuseboden (2b) ausgebildeten zylindrischen zweiten Ausnehmung (2h) mit radialem Spiel gelagert ist.

5. Eckrohrsieb nach Anspruch 4,
**dadurch gekennzeichnet,**
**dass** der erste Führungsring (5b) außenseits auf seiner Mantelfläche, über seinen Umfang verteilt und wenigstens axial orientiert, eine Anzahl von nutenförmigen ersten Ausnehmungen (5k) aufweist, dass die zylindrische zweite Ausnehmung (2h) auf ihrer Umfangsfläche, über ihren Umfang verteilt und wenigstens axial orientiert, eine Anzahl von nutenförmigen zweiten Ausnehmungen (2i) aufweist, und dass die jeweiligen Ausnehmungen (5k, 2h) die Lagerstelle (5b, 6c; 5i, 2h) des zugeordneten Führungsringes (5b, 5i) fluiddurchgängiger machen.

6. Eckrohrsieb nach Anspruch 5,
**dadurch gekennzeichnet,**
**dass** die Ausnehmungen (5k, 2h) neben dem jeweiligen axialen Richtungsvektor zusätzlich jeweils einen tangentialen Richtungsvektor mit gleichem Durchlaufsinn aufweisen.

7. Eckrohrsieb nach einem der Ansprüche 1 bis 6,
**dadurch gekennzeichnet,**
**dass** die schließgliedseitige erste Sitzfläche (4c) und die sitzringseitige zweite Sitzfläche (5f) jeweils kegelförmig ausgebildet sind und miteinander korrespondieren.

8. Eckrohrsieb nach einem der Ansprüche 1 bis 7,
**dadurch gekennzeichnet,**
**dass** das Schließglied (4a) die Durchtrittsöffnung (5e) in Richtung zum Gehäuseboden (2b) hin schließt.

9. Eckrohrsieb nach einem der Ansprüche 3 bis 8,
**dadurch gekennzeichnet,**
**dass** zwei Verbindungsöffnungen (5h) vorgesehen sind, die diametral angeordnet sind.

10. Eckrohrsieb nach einem der Ansprüche 1 bis 9,
**dadurch gekennzeichnet,**
**dass** der Siebeinsatz (5) eine als Ganzes auswechselbare Einheit bildet.

11. Eckrohrsieb nach einem der Ansprüche 1 bis 10,
**dadurch gekennzeichnet,**
**dass** der Balg (4b) als Faltenbalg oder Wellrohr ausgebildet ist und zusammen mit dem Schließglied (4a) einerseits und einem Balgflansch (4d) andererseits eine Schließgliedanordnung (4) bildet, die einstückig aus Polytetrafluorethylen (PTFE) hergestellt ist.

12. Eckrohrsieb nach einem der Ansprüche 1 bis 10,
**dadurch gekennzeichnet,**
**dass** der Balg (4b) als Faltenbalg oder Wellrohr ausgebildet ist und zusammen mit dem Schließglied (4a) einerseits und einem Balgflansch (4d) andererseits eine Schließgliedanordnung (4) bildet, die einstückig aus Metall, vorzugsweise aus nichtrostendem Stahl, hergestellt ist.

13. Eckrohrsieb nach einem der Ansprüche 1 bis 12,
**dadurch gekennzeichnet,**
**dass** der Antrieb (3) fernsteuerbar und als Hubantrieb mit einem druckmittelbeaufschlagten Kolben mit Federrückstellung ausgeführt ist.

14. Eckrohrsieb nach einem der Ansprüche 1 bis 13,
**dadurch gekennzeichnet,**
**dass** eine Flanschverbindung (2c, 6a; 2c*, 6a*) den Gehäusekörper (2) mit dem Gehäusedeckel (6) verbindet.

15. Eckrohrsieb nach Anspruch 14,
**dadurch gekennzeichnet,**
**dass** die Flansche (2c, 6a) als Klemmflansche ausgeführt sind, die ein erster Spannring (7) miteinander verbindet.

16. Eckrohrsieb nach Anspruch 14,
**dadurch gekennzeichnet,**
**dass** die Flansche (2c*, 6a*) miteinander verschraubt sind.

17. Eckrohrsieb nach einem der Ansprüche 1 bis 16,
**dadurch gekennzeichnet,**
**dass** der Antrieb (3) einen als Klemmflansch ausgebildeten Antriebsflansch (3a) aufweist, dass am Gehäusedeckel (6) endseitig ein als Klemmflansch ausgebildeter zweiter Deckelflansch (6b) vorgesehen ist, und dass die Klemmflansche (3a, 6b) über einen zweiten Spannring (9) miteinander verbunden sind.

18. Eckrohrsieb nach Anspruch 17,
**dadurch gekennzeichnet,**
**dass** der Antriebsflansch (3a) und der zweite Deckelflansch (6b) in Verbindung mit der Innenkontur des sich anschließenden Gehäusedeckels (6) das als Balgflansch (4d) ausgebildete Ende des Balges (4b) formschlüssig und über den zweiten Dichtring (10) statisch abgedichtet aufnehmen.

19. Eckrohrsieb nach einem der Ansprüche 1 bis 18,
**dadurch gekennzeichnet,**
**dass** in der Ruhestellung des Antriebs (3) das Schließglied (4a) die Durchtrittsöffnung (5e) verschließt, und dass allein durch Trennung der Klemmflansche (3a, 6b) der Antrieb (3) und die mit letzterem über die Ventilstange (4e) verbundene Schließgliedanordnung (4) als Ganzes aus dem Gehäusedeckel (6), der mit dem Gehäusekörper (2) über einen ersten Dichtring (8) statisch abgedichtet verbundenen bleiben kann, ausbaubar ist.

20. Eckrohrsieb nach einem der Ansprüche 1 bis 19,
**dadurch gekennzeichnet**,
das der Siebeinsatz (5) innerhalb seines Siebmantels (5a) einen langgestreckten Strömungskörper (20) umschließt, wobei letzterer erste, zweite und dritte Umlenkmittel (22, 23, 24) aufweist, die, in der genannten Reihenfolge und beginnend vom Eintritt (E), über seine Länge verteilt angeordnet sind und jeweils auch eine zum Siebmantel (5a) hin orientierte rotationssymmetrische radiale Strömungskomponente erzeugen.

21. Eckrohrsieb nach Anspruch 20,
**dadurch gekennzeichnet,**
**dass** das erste Umlenkmittel (22) und das zweite Umlenkmittel (23) jeweils als eine konusförmige Hülse mit Innendurchgang ausgeführt sind, die, in Durchströmungsrichtung gesehen, sich öffnend und deren Rotationsachsen koaxial zur Längsachse des Siebmantels (5a) ausgerichtet sind, dass das dritte Umlenkmittel (24) als Prallscheibe ausgebildet ist, die zentrisch im Siebmantel (5a) angeordnet ist, und dass die Umlenkmittel (22, 23, 24) jeweils außenseits mit dem Siebmantel (5a) einen kreisförmigen Ringspalt (28) bilden.

22. Eckrohrsieb nach Anspruch 21,
**dadurch gekennzeichnet,**
**dass** die erste kleine Durchtrittsöffnung (25) am ersten Umlenkmittel (22) größer als die zweite kleine Durchtrittsöffnung (26) am zweiten Umlenkmittel (23) ausgeführt ist.

23. Eckrohrsieb nach einem der Ansprüche 20 bis 22,
**dadurch gekennzeichnet,**
**dass** der Strömungskörper (20) aus wenigstens einer langgestreckten Distanzleiste (21) besteht, die gegenüber dem Siebeinsatz (5) ein Fügespiel aufweist und an der die Umlenkmittel (22, 23, 24) fest angeordnet sind.

24. Eckrohrsieb nach Anspruch 23,
**dadurch gekennzeichnet,**
**dass** vier über den Umfang des Siebmantels (5a) gleichmäßig verteilt angeordnete Distanzleisten (21) vorgesehen sind.

25. Eckrohrsieb nach einem der Ansprüche 20 bis 24,
**dadurch gekennzeichnet,**
**dass** wenigstens ein erstes Umlenkmittel (22), anschließend wenigstens ein zweites Umlenkmittel (23) und abschließend das dritte Umlenkmittel (24) vorgesehen sind.

26. Eckrohrsieb nach einem der Ansprüche 20 bis 25,
**dadurch gekennzeichnet,**
**dass** drei erste Umlenkmittel (22), zwei zweite Umlenkmittel (23) und das dritte Umlenkmittel (24) vorgesehen sind.

27. Verfahren zur automatischen Abreinigung des Eckrohrsiebes (1) nach einem der Ansprüche 1 bis 26,
**dadurch gekennzeichnet,**
**dass** eine Durchflussreinigung und/oder Durchflusssterilisierung des Eckrohrsiebes (1) unter aseptischen Bedingungen nach folgenden Schritten erfolgt:
a) Überführen des Schließgliedes (4a) in seine Offenstellung, so dass der Siebeinsatz (5) begrenzt radial und begrenzt axial allseits freigegeben wird;
b) Zuführen eines Reinigungsmittels (R) oder Sterilisierungsmittels (S) über die Eintrittsöffnung (2e) in das Eckrohrsieb (1);
c) Abreinigen von Siebrückständen (B) durch ein gesteuertes Reinigungs-oder Sterilisierungsmittel (R*; S*) längs der Innenwand des Siebmantels (5a) auf dem Weg über die Durchtrittsöffnung (5e) und Abführen der Mittel (R*; S*) und der Siebrückstände (B) über den Ringraum (11);
d) gleichzeitig Reinigen der Lagerstellen des Siebeinsatzes (5) einerseits im Bereich des Gehäusedeckels (6) mittels erster Teilströme Reinigungs- oder Sterilisierungsmittel (r₁, s₁) auf dem Weg über die Durchtrittsöffnung (5e) in den Ringraum (11) und andererseits im Bereich des Gehäusebodens (2b) mittels zweiter Teilströme Reinigungs- oder Sterilisierungsmittel (r₂, s₂) aus dem Innenraum des Siebmantels (5a) in den Ringraum (11);
e) gleichzeitig Reinigen aller Siebbohrungen des Siebmantels (5a) mittels Teilströme Reinigungs- oder Sterilisierungsmittel (r, s) aus dem Innenraum des Siebmantels (5a) in den Ringraum (11);
f) Ausschieben des Reinigungs- oder Sterilisierungsmittels aus dem Eckrohrsieb (1) und Abführen desselben als abgeführtes Reinigungs- oder Sterilisierungsmittel (R**; S**) über die Austrittsöffnung (2g) und
h) Überführen des Schließgliedes (4a) in seine Schließstellung.

28. Verfahren nach Anspruch 27,
**dadurch gekennzeichnet,**
**dass** das Schließglied (4a) nach den Schritten a) bis e) über eine vorgegebene Zeitspanne eine Abfolge von Schließ- und Öffnungsbewegungen ausführt, und dass sich an die letzte Öffnungsbewegung die Schritte f) und g) anschließen.

## Claims

1. Corner pipe filter (1) for aseptic product processing, with a stretched, cup-shaped housing body (2), which is releasably locked with a housing cover (6), with a stretched, tubular filter insert (5), which is oriented with its longitudinal axis at least parallel to the longitudinal axis of the housing body (2) within the same and which is interchangeably mounted on one side in a housing bottom (2b) of the housing body (2) and on the other side in the housing cover (6), wherein an annular space (11) is designed between a filter casing (5a) of the filter insert (5) and a housing casing (2a) of the housing body (2), with an inlet nozzle (2d) arranged on the housing bottom (2b) with an inlet opening (2e), which establishes a fluid-penetrable connection to the interior of the filter casing (5a), with an outlet nozzle (2f) arranged on the housing casing (2a) with an outlet opening (2g), which establishes a fluid-penetrable connection to the annular space (11), with at least one optionally switchable opening (5e) designed in the area of the housing cover (6) in the filter insert (5), via which the interior of the filter casing (5a) is optionally connected with the annular space (11), wherein the opening (5e) is surrounded by a seat ring (5d) tracing the filter casing (5a) on the front side, wherein a first seating (5f) is designed in or on the opening (5e), wherein the opening (5e) is optionally opened or closed via a translationally relocatable closing member (4a), which works with a second seating (4c) together with the first seating (5f), wherein the closing member (4a) is connected with a remote-controllable drive (3) via a valve rod (4e) fed through the housing cover (6), and wherein this feed-through is bridged with a bellow (4b), which coaxially surrounds the valve rod (4e) and which is connected on one side with the closing member (4a) and on the other side with the housing cover (6).

2. Corner pipe filter according to claim 1,
**characterized in that**
the filter insert (5) is swimmingly mounted in the open position of the closing member (4a) and is finitely relocatable in the perimeter of a specified axial relocation path (12).

3. Corner pipe filter according to claim 1 or 2,
**characterized in that**
the housing casing (2a) and the filter casing (5a) are each designed cylindrically and are arranged concentrically to each other.

4. Corner pipe filter according to one of claims 1 through 3,
**characterized in that**,
seen in the axial direction, a connection housing (5g) surrounding the bellow (4b) and mainly receiving it in the axial direction, which has at least one connection opening (5h) to the annular space (11) in its circumferential surface, is connected to the seat ring (5d), **in that** the connection housing (5g) on its end facing away from the seat ring (5d) leads to a first guide ring (5b), which is mounted in a cylindrical first recess (6c) with radial play arranged in the housing cover (6) and **in that** a second guide ring (5i), which is mounted in a cylindrical second recess (2h) with radial play designed in the housing bottom (2b), is arranged on the end of the filter casing (5a) facing away from the seat ring (5d).

5. Corner pipe filter according to claim 4,
**characterized in that**
the first guide ring (5b) has a number of groove-like, first recesses (5k) on the outside of its circumferential surface, distributed over its perimeter and at least axially oriented, **in that** the cylindrical second recess (2h) has a number of groove-like, second recesses (2i) on its peripheral surface, distributed over its perimeter and at least axially oriented and **in that** the respective recesses (5k, 2h) make the bearing point (5b, 6c; 5i, 2h) of the associated guide ring (5b, 5i) more fluid-penetrable.

6. Corner pipe filter according to claim 5,
**characterized in that**
the recesses (5k, 2h) next to the respective axial direction vector each additionally have a tangential direction vector with the same flow direction.

7. Corner pipe filter according to one of claims 1 through 6,
**characterized in that**
the closing-member-side, first seating (4c) and the seat-ring-side, second seating (5f) are each designed conically and correspond with each other.

8. Corner pipe filter according to one of claims 1 through 7,
**characterized in that**
the closing member (4a) closes the opening (5e) in the direction of the housing bottom (2b).

9. Corner pipe filter according to one of claims 3 through 8,
**characterized in that**
two connection openings (5h) are provided, which are arranged diametrically.

10. Corner pipe filter according to one of claims 1 through 9,
**characterized in that**
the filter insert (5) forms one whole replaceable unit.

11. Corner pipe filter according to one of claims 1 through 10,
**characterized in that**
the bellow (4b) is designed as a corrugated bellow or corrugated pipe and forms a closing member arrangement (4) together with the closing member (4a) on one side and a bellow flange (4d) on the other side, which is produced as one piece made of polytetrafluoroethylene (PTFE).

12. Corner pipe filter according to one of claims 1 through 10,
**characterized in that**
the bellow (4b) is designed as a corrugated bellow or corrugated pipe and forms a closing member arrangement (4) together with the closing member (4a) on one side and a bellow flange (4d) on the other side, which is produced as one piece made of metal, preferably stainless steel.

13. Corner pipe filter according to one of claims 1 through 12,
**characterized in that**
the drive (3) is remote controllable and is designed as a lift drive with a pressurized piston with spring reset.

14. Corner pipe filter according to one of claims 1 through 13,
**characterized in that**
a flange connection (2c, 6a; 2c*, 6a*) connects the housing body (2) with the housing cover (6).

15. Corner pipe filter according to claim 14,
**characterized in that**
the flanges (2c, 6a) are designed as clamp flanges, which a first tension ring (7) connects together.

16. Corner pipe filter according to claim 14,
**characterized in that**
the flanges (2c*, 6a*) are screwed together.

17. Corner pipe filter according to one of claims 1 through 16,
**characterized in that**
the drive (3) has a drive flange (3a) designed as a clamp flange, **in that** a second cover flange (6b) designed as a clamp flange is provided on the housing cover (6) on the end side and **in that** the clamp flanges (3a, 6b) are connected together via a second tension ring (9).

18. Corner pipe filter according to claim 17,
**characterized in that**
the drive flange (3a) and the second cover flange (6b) in connection with the inner contour of the connecting housing cover (6) receive the end of the bellow (4b) designed as a bellow flange (4d) in a form-fit manner and statically sealed via the second seal ring (10).

19. Corner pipe filter according to one of claims 1 through 18,
**characterized in that**,
in the resting position of the drive (3), the closing member (4a) closes the opening (5e) and **in that**, solely through separation of the clamp flanges (3a, 6b), the drive (3) and the closing member arrangement (4) connected with the latter via the valve rod (4e) are removable as a whole from the housing cover (6), which can remain connected with the housing body (2) via a first seal ring (8) in a statically sealed manner.

20. Corner pipe filter according to one of claims 1 through 19,
**characterized in that**
the filter insert (5) within its filter casing (5a) surrounds a stretched flow body (20), wherein the latter has first, second and third deflection means (22, 23, 24), which are arranged distributed over its length in the named sequence and beginning from the entry (E), and each also generate a rotationally symmetrical, radial flow component oriented towards the filter casing (5a).

21. Corner pipe filter according to claim 20,
**characterized in that**
the first deflection means (22) and the second deflection means (23) are each designed as a conical shell with an inner duct, which, seen from the flow direction, are opening and with their rotational axes aligned coaxial to the longitudinal axis of the filter casing (5a), **in that** the third deflection means (23) is designed as a baffle plate, which is arranged centrically in the filter casing (5a), and **in that** the deflection means (22, 23, 24) each form a circular annular gap (28) with the filter casing (5a) on the outside.

22. Corner pipe filter according to claim 21,
**characterized in that**
the first small opening (25) on the first deflection means (22) is designed larger than the second small opening (26) on the second deflection means (23).

23. Corner pipe filter according to one of claims 20 through 22,
**characterized in that**
the flow body (20) is made up of at least one stretched spacing strip (21), which has joint play opposite the filter insert (5) and on which the deflection means (22, 23, 24) are permanently arranged.

24. Corner pipe filter according to claim 23,
**characterized in that**
four spacing strips (21) evenly distributed over the perimeter of the filter casing (5a) are provided.

25. Corner pipe filter according to one of claims 20 through 24,
**characterized in that**
at least one first deflection means (22), subsequently at least one second deflection means (23) and subsequently the third deflection means (24) are provided.

26. Corner pipe filter according to one of claims 20 through 25,
**characterized in that**
three first deflection means (22), two second deflection means (23) and the third deflections means (24) are provided.

27. Method for the automatic cleaning of the corner pipe filter (1) according to one of claims 1 through 26,
**characterized in that**
a flow-through cleaning and/or flow-through sterilization of the corner pipe filter (1) takes place under aseptic conditions according to the following steps:
a) Transfer of the closing member (4a) into its open position so that the filter insert (5) restricted radially and restricted axially is released on all sides;
b) Delivery of a cleanser (R) or sterilization means (S) to the corner pipe filter (1) via the inlet opening (2e);
c) Cleaning off of filter residue (B) through a controlled cleanser or sterilization means (R*, S*) along the inner wall of the filter casing (5a) on the way over the opening (5e) and discharge of the means (R*, S*) and the filter residue (B) via the annular space (11);
d) Simultaneous cleaning of the bearing points of the filter insert (5) on one side in the area of the housing cover (6) by means of first partial flows of cleanser or sterilization means (r₁, s₁) on the way over the opening (5e) into the annular space (11) and on the other side in the area of the housing bottom (2b) by means of second partial flows of cleanser or sterilization means (r₂, s₂) from the interior of the filter casing (5a) into the annular space (11);
e) Simultaneous cleaning of all filter bore holes of the filter casing (5a) by means of partial flows of cleanser or sterilization means (r, s) from the interior of the filter casing (5a) into the annular space (11);
f) Pushing of the cleanser or sterilization means out of the corner pipe filter (1) and its discharge as discharged cleanser or sterilization means (R**, S**) via the outlet opening (2g) and
g) Transfer of the closing member (4a) into its closed position.

28. The method according to claim 27,
**characterized in that**
the closing member (4a) executes a sequence of closing and opening movements over a
specified period of time according to steps a) through e) and **in that** steps f) and g) follow the last opening movement.

## Revendications

1. Crible de tuyaux d'angle (1) pour traitement de produit aseptique, avec un corps de boîtier (2) en forme de pot étiré en long, qui est fermé de manière amovible par un couvercle de boîtier (6), avec un crible rapporté (5) en forme de tube et étiré en long, qui est orienté avec son axe longitudinal au moins parallèlement à l'axe longitudinal du corps de boîtier (2) à l'intérieur de celui-ci et qui est logé d'une part dans un fond de boîtier (2b) du corps de boîtier (2) et d'autre part dans le couvercle de boîtier (6) de manière remplaçable, dans lequel un espace annulaire (11) est formé entre une enveloppe de crible (5a) du crible rapporté (5) et une enveloppe de boîtier (2a) du corps de boîtier (2), avec un raccord d'entrée (2d) disposé sur le fond de boîtier (2b) avec une ouverture d'entrée (2e), qui crée une connexion fluidique avec l'espace intérieur de l'enveloppe de crible (5a), avec un raccord de sortie (2f) disposé sur l'enveloppe de boîtier (2a) avec une ouverture de sortie (2g) qui crée une connexion fluidique avec l'espace annulaire (11), avec au moins une ouverture de passage (5e) formée dans la zone du couvercle de boîtier (6) dans le crible rapporté (5) pouvant être commutée de manière sélective, par laquelle l'espace intérieur de l'enveloppe de crible (5a) est connecté de manière sélective avec l'espace annulaire (11), dans lequel l'ouverture de passage (5e) est entourée par un anneau de siège (5d) bordant du côté frontal l'enveloppe de crible (5a), dans lequel une première surface de siège (5f) est formée dans ou sur l'ouverture de passage (5e), dans lequel l'ouverture de passage (5e) est ouverte ou fermée de manière sélective par un organe de fermeture (4a) mobile en translation qui, avec une seconde surface de siège (4c), coopère avec la première surface de siège (5f), dans lequel l'organe de fermeture (4a) est connecté avec un entraînement (3) pouvant être commandé à distance par une tige de soupape (4e) guidée à travers le couvercle de boîtier (6), et dans lequel ce guidage traversant est comblé avec un soufflet (4b), qui entoure de manière coaxiale la tige de soupape (4e) et qui est connecté d'une part à l'organe de fermeture (4a) et d'autre part au couvercle de boîtier (6).

2. Crible de tuyaux d'angle selon la revendication 1,
**caractérisé en ce que**,
dans la position ouverte de l'organe de fermeture (4a), le crible rapporté (5) est logé de manière flottante et est mobile de manière limitée dans l'étendue d'un chemin de déplacement axial (12) prédéterminé.

3. Crible de tuyaux d'angle selon la revendication 1 ou 2,
**caractérisé en ce que**
l'enveloppe de boîtier (2a) et l'enveloppe de crible (5a) sont respectivement réalisées de manière cylindrique et disposées de manière concentrique l'une par rapport à l'autre.

4. Crible de tuyaux d'angle selon l'une des revendications 1 à 3,
**caractérisé en ce que**,
vu dans la direction axiale, vient s'attacher à l'anneau de siège (5d) un boîtier de connexion (5g) entourant le soufflet (4b) et recevant essentiellement celui-ci dans la direction axiale, le boîtier de connexion possédant dans sa surface d'enveloppe au moins une ouverture de connexion (5h) avec l'espace annulaire (11), **en ce que** le boîtier de connexion (5g) à son extrémité éloignée de l'anneau de siège (5d) débouche dans un premier anneau de guidage (5b), qui est logé avec un jeu radial dans un premier évidement (6c) cylindrique disposé dans le couvercle de boîtier (6), et **en ce que** à l'extrémité éloignée de l'anneau de siège (5d) de l'enveloppe de crible (5a) est disposé un second anneau de guidage (5i), qui est logé avec un jeu radial dans un second évidement (2h) cylindrique formé dans le fond de boîtier (2b).

5. Crible de tuyaux d'angle selon la revendication 4,
**caractérisé en ce que**
le premier anneau de guidage (5b) présente côté extérieur sur sa surface d'enveloppe, distribué sur sa circonférence et orienté au moins axialement, un nombre de premiers évidements (5k) en forme de rainures, **en ce que** le second évidement cylindrique (2h) présente sur sa surface circonférentielle, distribué sur sa circonférence et orienté au moins axialement, un nombre de seconds évidements (2i) en forme de rainures, et **en ce que** les évidements respectifs (5k, 2h) rendent meilleur le passage de fluide dans le logement (5b, 6c ; 5i, 2h) de l'anneau de guidage (5b, 5i) associé.

6. Crible de tuyaux d'angle selon la revendication 5,
**caractérisé en ce que**
les évidements (5k, 2h) présentent outre le vecteur directionnel axial respectif en plus respectivement un vecteur directionnel tangentiel avec le même sens de parcours.

7. Crible de tuyaux d'angle selon l'une des revendications 1 à 6,
**caractérisé en ce que**
la première surface de siège (4c) côté organe de fermeture et la seconde surface de siège (5f) côté anneau de siège sont formées respectivement en forme de cône et correspondent l'une avec l'autre.

8. Crible de tuyaux d'angle selon l'une des revendications 1 à 7,
**caractérisé en ce que**
l'organe de fermeture (4a) ferme l'ouverture de passage (5e) dans la direction allant vers le fond de boîtier (2b).

9. Crible de tuyaux d'angle selon l'une des revendications 3 à 8,
**caractérisé en ce que**
deux ouvertures de connexion (5h) sont prévues, qui sont disposées diamétralement.

10. Crible de tuyaux d'angle selon l'une des revendications 1 à 9,
**caractérisé en ce que**
le crible rapporté (5) forme une unité remplaçable en tant que tout.

11. Crible de tuyaux d'angle selon l'une des revendications 1 à 10,
**caractérisé en ce que**
le soufflet (4b) est formé en tant que soufflet en accordéon ou tube ondulé et forme ensemble avec l'organe de fermeture (4a) d'une part et une bride de soufflet (4d) d'autre part un agencement d'organe de fermeture (4) qui est fabriqué en une seule pièce en polytétrafluoroéthylène (PTFE).

12. Crible de tuyaux d'angle selon l'une des revendications 1 à 10,
**caractérisé en ce que**
le soufflet (4b) est formé en tant que soufflet en accordéon ou tube ondulé et forme ensemble avec l'organe de fermeture (4a) d'une part et une bride de soufflet (4d) d'autre part un agencement d'organe de fermeture (4), qui est fabriqué en une seule pièce en métal, de préférence en acier inoxydable.

13. Crible de tuyaux d'angle selon l'une des revendications 1 à 12,
**caractérisé en ce que**
l'entraînement (3) est réalisé de manière commandable à distance et en tant qu'entraînement de montée avec un piston alimenté en moyen de pression avec rappel par ressort.

14. Crible de tuyaux d'angle selon l'une des revendications 1 à 13,
**caractérisé en ce que**
un raccord à brides (2c, 6a ; 2c*, 6a*) connecte le corps de boîtier (2) au couvercle de boîtier (6).

15. Crible de tuyaux d'angle selon la revendication 14,
**caractérisé en ce que**
les brides (2c, 6a) sont réalisées en tant que brides de serrage qu'un premier anneau tendeur (7) connecte l'une à l'autre.

16. Crible de tuyaux d'angle selon la revendication 14,
**caractérisé en ce que**
les brides (2c*, 6a*) sont vissées l'une avec l'autre.

17. Crible de tuyaux d'angle selon l'une des revendications 1 à 16,
**caractérisé en ce que**
l'entraînement (3) présente une bride d'entraînement (3a) formée en tant que bride de serrage, **en ce que** sur le couvercle de boîtier (6) côté extrémité une seconde bride de couvercle (6b) est prévue formée en tant que bride de serrage, et **en ce que** les brides de serrage (3a, 6b) sont connectées l'une à l'autre par un second anneau tendeur (9).

18. Crible de tuyaux d'angle selon la revendication 17,
**caractérisé en ce que**
la bride d'entraînement (3a) et la seconde bride de couvercle (6b) reçoivent, en connexion avec le contour intérieur du couvercle de boîtier (6) s'y attachant, l'extrémité du soufflet (4b) formée en tant que bride de soufflet (4d) de manière positive et de manière statiquement étanche par la seconde bague d'étanchéité (10).

19. Crible de tuyaux d'angle selon l'une des revendications 1 à 18,
**caractérisé en ce que**,
dans la position de repos de l'entraînement (3), l'organe de fermeture (4a) ferme l'ouverture de passage (5e), et **en ce que** seulement par séparation des brides de serrage (3a, 6b), l'entraînement (3) et l'agencement d'organe de fermeture (4) connecté à ce dernier par la tige de soupape (4e) peut être démonté en tant que tout hors du couvercle de boîtier (6) qui peut rester connecté au corps de boîtier (2) de manière statiquement étanche par une première bague d'étanchéité (8).

20. Crible de tuyaux d'angle selon l'une des revendications 1 à 19,
**caractérisé en ce que**
le crible rapporté (5) entoure à l'intérieur de son enveloppe de crible (5a) un corps d'écoulement (20) étiré en long, dans lequel ce dernier présente des premier, second et troisième moyens déflecteurs (22, 23, 24) qui, dans l'ordre cité et partant de l'entrée (E), sont disposés distribués sur sa longueur et génèrent respectivement également un composant d'écoulement radial à symétrie de révolution orienté vers l'enveloppe de crible (5a).

21. Crible de tuyaux d'angle selon la revendication 20,
**caractérisé en ce que**
le premier moyen déflecteur (22) et le second moyen déflecteur (23) sont réalisés respectivement en tant que douilles en forme de cône avec passage intérieur, qui, vu dans la direction de flux, sont orientées s'ouvrant et avec leurs axes de rotation coaxiaux à l'axe longitudinal de l'enveloppe de crible (5a), **en ce que** le troisième moyen déflecteur (24) est formé en tant que disque d'impact, qui est disposé de manière centrée dans l'enveloppe de crible (5a), et **en ce que** les moyens déflecteurs (22, 23, 24) forment respectivement côté extérieur un interstice annulaire (28) en forme de cercle avec l'enveloppe de crible (5a).

22. Crible de tuyaux d'angle selon la revendication 21,
**caractérisé en ce que**
la première petite ouverture de passage (25) sur le premier moyen déflecteur (22) est réalisée plus grande que la seconde petite ouverture de passage (26) sur le second moyen déflecteur (23).

23. Crible de tuyaux d'angle selon l'une des revendications 20 à 22,
**caractérisé en ce que**
le corps d'écoulement (20) est composé d'au moins une cale d'écartement (21) étirée en long, qui présente en face du crible rapporté (5) un jeu d'assemblage et à laquelle les moyens déflecteurs (22, 23, 24) sont disposés fixement.

24. Crible de tuyaux d'angle selon la revendication 23,
**caractérisé en ce que**
quatre cales d'écartement (21) sont prévues distribuées régulièrement sur la circonférence de l'enveloppe de crible (5a).

25. Crible de tuyaux d'angle selon l'une des revendications 20 à 24,
**caractérisé en ce que**
au moins un premier moyen déflecteur (22), ensuite au moins un second moyen déflecteur (23) et enfin le troisième moyen déflecteur (24) sont prévus.

26. Crible de tuyaux d'angle selon l'une des revendications 20 à 25,
**caractérisé en ce que**
trois premiers moyens déflecteurs (22), deux seconds moyens déflecteurs (23) et le troisième moyen déflecteur (24) sont prévus.

27. Procédé de nettoyage automatique du crible de tuyaux d'angle (1) selon l'une des revendications 1 à 26,
**caractérisé en ce que**
un nettoyage circulant et/ou une stérilisation circulante du crible de tuyaux d'angle (1) est effectué(e) dans des conditions aseptiques selon les étapes suivantes consistant à :
a) transférer l'organe de fermeture (4a) dans sa position ouverte, de sorte que le crible rapporté (5) est libéré de tous les côtés radialement de manière limitée et axialement de manière limitée ;
b) amener un moyen de nettoyage (R) ou un moyen de stérilisation (S) par l'ouverture d'entrée (2e) dans le crible de tuyaux d'angle (1) ;
c) nettoyer des refus de criblage (B) par un moyen de nettoyage ou de stérilisation (R* ; S*) commandé le long de la paroi intérieure de l'enveloppe de crible (5a) sur le chemin par l'ouverture de passage (5e) et évacuer les moyens (R* ; S*) et les refus de criblage (B) par l'espace annulaire (11) ;
d) simultanément nettoyer les logements du crible rapporté (5) d'une part dans la zone du couvercle de boîtier (6) au moyen de premiers flux partiels de moyen de nettoyage ou de stérilisation (r₁, s₁) sur le chemin par l'ouverture de passage (5e) dans l'espace annulaire (11) et d'autre part dans la zone du fond de boîtier (2b) au moyen de seconds flux partiels de moyen de nettoyage ou de stérilisation (r₂, s₂) hors de l'espace intérieur de l'enveloppe de crible (5a) dans l'espace annulaire (11) ;
e) simultanément nettoyer tous les trous de crible de l'enveloppe de crible (5a) au moyen de flux partiels de moyen de nettoyage ou de stérilisation (r, s) hors de l'espace intérieur de l'enveloppe de crible (5a) dans l'espace annulaire (11) ;
f) éjecter le moyen de nettoyage ou de stérilisation hors du crible de tuyaux d'angle (1) et évacuer celui-ci en tant que moyen de nettoyage ou de stérilisation évacué (R** ; S**) par l'ouverture de sortie (2g) et
h) transférer l'organe de fermeture (4a) dans sa position fermée.

28. Procédé selon la revendication 27,
**caractérisé en ce que**
l'organe de fermeture (4a) exécute après les étapes a) à e) pendant une période de temps prédéterminée une suite de mouvements de fermeture et d'ouverture, et **en ce que** les étapes f) et g) suivent le dernier mouvement d'ouverture.
